# FASCICULE DE BREVET EUROPEEN

(11) **EP 1 074 761 B1**
(45) Date de publication et mention de la délivrance du brevet: **24.09.2003**
(21) Numéro de dépôt: 00402117.6
(22) Date de dépôt: 24.07.2000
(51) Int. Cl.: F16F 13/18, F16F 13/10

(54) **Support hydroélastique, notamment pour la suspension d'un groupe motopropulseur dans la caisse d'un véhicule automobile**
Hydroelastisches Lager, insbesondere für die Lagerung einer Antriebseinheit in einer Fahrzeugkarosserie
Hydroelastic support, in particular for the suspension of an automotive vehicle drive unit in a vehicle body

(30) Priorité: 02.08.1999 FR 9910033
(43) Date de publication de la demande: 07.02.2001
(73) Titulaire: Peugeot Citroen Automobiles SA, 92200 Neuilly sur Seine (FR)
(72) Inventeur: Le Fol, Marcel, 35410 Domploup (FR)
(74) Mandataire: Lanceplaine, Jean-Claude

(56) Documents cités:
- FR-A- 2 572 778
- FR-A- 2 594 923
- US-A- 4 971 298

## Description

La présente invention concerne un support hydroélastique destiné à être interposé entre deux ensembles à suspendre l'un par rapport à l'autre, notamment pour la suspension d'un groupe motopropulseur dans une caisse d'un véhicule automobile.

Les supports hydroélastiques comportent généralement un corps formé par une masse en matériau élastomère reliant une armature supérieure et une armature inférieure fixées respectivement sur les deux éléments et une chambre de travail délimitée par ladite masse en matériau élastomère et par une cloison transversale au-dessous de laquelle est fixée une membrane inférieure souple délimitant avec ladite cloison transversale une chambre d'expansion.

La chambre d'expansion est reliée à la chambre de travail par un conduit de liaison et des orifices de communication et ces chambres sont remplies de liquide.

La masse en matériau élastomère fait fonction de suspension élastique et participe également, avec les autres éléments du support, à la constitution d'un dispositif d'amortissement hydraulique de vibrations qui a notamment pour fonction d'assurer un bon filtrage des vibrations à haute fréquence et de faible amplitude émises par un moteur de véhicule automobile et un bon amortissement des vibrations à basse fréquence et de forte amplitude entre le moteur et la caisse du véhicule.

Jusqu'à présent, l'une des armatures de la masse en matériau élastomère et notamment l'armature inférieure constitue un boîtier dans lequel sont placés les principaux composants du support et qui sont reliés à ce boîtier par adhérisation et/ou par sertissage.

Un tel type de support hydroélastique présente un encombrement important et des caractéristiques d'amortissement qui sont spécifiques à chaque support, cette conception étant donc peu adaptée à la fabrication en grande série d'une gamme de support hydroélastique dont chacun possède des caractéristiques d'amortissement adaptées à son utilisation.

On connaît également dans le document FR-A-2 572 778 un support hydroélastique destiné à être interposé entre deux éléments à suspendre l'un par rapport à l'autre, notamment pour la suspension d'un groupe motopropulseur dans une caisse d'un véhicule automobile, du type comprenant :
- un corps formé par une masse en matériau élastomère reliant, d'une part, une première armature munie d'un organe de liaison avec l'un des éléments à suspendre et, d'autre part, une seconde armature,
- un boîtier reliant la seconde armature à l'autre des élément à suspendre,
- une chambre de travail et une chambre d'expansion remplies de liquide et communiquant entre elles par un conduit de liaison , et
- une membrane annulaire entre la chambre de travail et la chambre d'expansion. La chambre de travail est délimitée d'un côté par la masse en matériau élastomère du corps et de l'autre côté par la paroi frontale de l'enveloppe.

L'invention a pour but de proposer un support hydroélastique présentant un encombrement réduit en hauteur et dont la conception est simplifiée ce qui permet de diminuer le coût de l'ensemble, tout en permettant de pouvoir réaliser une gamme de supports possédant des caractéristiques d'amortissement adaptées à leur utilisation et d'aboutir à une standardisation de nombreux composants.

L'invention a donc pour objet un support hydroélastique destiné à être interposé entre deux éléments à suspendre l'un par rapport à l'autre, notamment pour la suspension d'un groupe motopropulseur dans une caisse d'un véhicule automobile, du type comprenant :
- un corps formé par une masse en matériau élastomère reliant, d'une part, une armature supérieure munie d'un organe de liaison avec l'un des éléments à suspendre et, d'autre part, une armature inférieure,
- un boîtier reliant l'armature inférieure du corps à l'autre desdits éléments à suspendre,
- une chambre de travail et une chambre d'expansion remplies de liquide et communiquant entre elles par un conduit de liaison, ladite chambre d'expansion présentant une forme annulaire autour de la chambre de travail et étant délimitée en partie haute par une membrane montée sur la périphérie du corps et en partie basse par un clapet de découpage hydraulique disposé entre la chambre de travail et la chambre d'expansion,
caractérisé en ce que la chambre de travail est délimitée en partie haute par la masse en matériau élastomère du corps et en partie basse par une pièce d'obturation disposée dans le boîtier et dans laquelle sont ménagés ledit conduit de liaison et ledit clapet de découplage hydraulique, ladite masse en matériau élastomère et ladite pièce d'obturation étant placées en vis à vis.

Selon d'autres caractéristiques de l'invention :
- le clapet de découplage hydraulique est formé par une membrane circulaire munie d'un passage axial et comprenant une paroi supérieure et une paroi inférieure parallèles et reliées entre elles par une paroi intermédiaire, ladite paroi supérieure comportant au moins une zone d'amincissement délimitant une section de-clapet coopérant, d'un côté, avec des orifices ménagés dans une portion horizontale de l'armature inférieure du corps et formant des passages de fluide depuis la chambre d'expansion et la section de clapet et, de l'autre côté, avec des canaux radiaux ménagés dans la pièce d'obturation et formant des passages de fluide depuis la chambre de travail vers ladite section de clapet,
- les orifices ménagés dans la portion horizontale de l'armature inférieure du corps sont disposés chacun en regard d'un conduit radial et le nombre et la section desdits canaux radiaux sont déterminés en fonction de la fréquence à amortir,
- la paroi supérieure comporte deux zones d'amincissement, une première zone d'amortissement du bourdonnement et une seconde zone de filtrage des bruits médiums de longueur et d'épaisseur supérieures à la longueur et à l'épaisseur de la première zone,
- la membrane circulaire est montée sur le bord périphérique de la pièce d'obturation,
- le bord libre de la paroi supérieure de la membrane circulaire est muni d'un bourrelet coopérant avec une gorge circulaire ménagée sur la face supérieure de la pièce d'obturation pour assurer l'étanchéité entre la chambre de travail et la chambre d'expansion,
- le bord libre de la paroi inférieure de la membrane circulaire et muni d'un bourrelet coopérant avec une gorge circulaire ménagée sur la face inférieure de la pièce d'obturation pour assurer l'étanchéité entre ladite pièce et le fond du boîtier,
- le conduit de liaison présente une forme semi-torique comportant une première extrémité débouchant dans la chambre de travail et une seconde extrémité débouchant dans la chambre d'expansion au moyen d'un embout vertical traversant la paroi supérieure de la membrane circulaire et la portion horizontale de l'armature inférieure du corps,
- l'armature inférieure du corps comporte une portion cylindrique verticale prolongeant vers le haut la portion horizontale et noyée dans la-masse en matériau élastomère,
- la membrane d'obturation de la chambre d'expansion a la forme d'une onde et est disposée entre une armature interne verticale destinée à être emmanchée sur la face externe de la masse en matériau élastomère et une armature externe verticale munie à sa partie inférieure d'une embase d'appui sur la portion horizontale de l'armature inférieure du corps et dont la face inférieure est recouverte d'une pellicule en matériau élastomère,
- le boîtier comporte un rebord vertical de positionnement et de sertissage de la cloison inférieure munie du clapet de découplage hydraulique, de l'armature inférieure du corps et de l'armature externe de la membrane d'obturation de la chambre d'expansion.

Les caractéristiques et avantages de l'invention apparaîtront au cours de la description qui va suivre, donnée à titre d'exemple et faite en référence aux dessins annexés, sur lesquels :
- la Fig. 1 est une vue en coupe axiale d'un support hydroélastique conforme à l'invention,
- la Fig. 2 est une vue éclatée, en coupe axiale, du support hydroélastique conforme à l'invention,
- la Fig. 3 est une vue de dessous du corps du support hydroélastique,

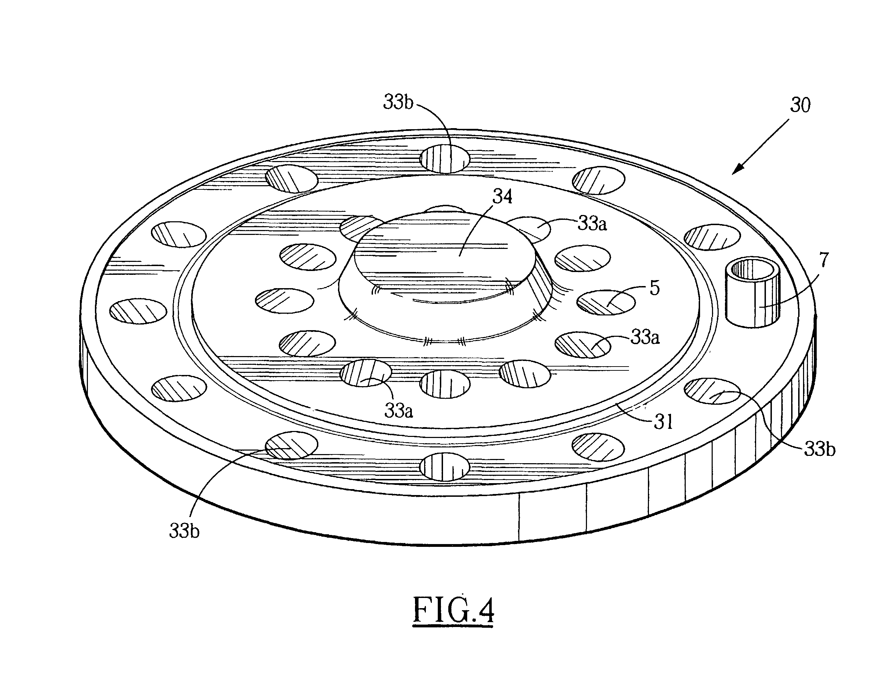

- la Fig. 4 est une vue en perspective montrant la face supérieure de la pièce d'obturation de la chambre de travail du support hydroélastique,
- la Fig. 5 est une vue en perspective montrant la face inférieure de la pièce d'obturation de la chambre de travail du support hydroélastique,
- la Fig. 6 est une vue de dessus du clapet de découplage hydraulique du support hydroélastique,
- la Fig. 7 à plus grande échelle et en coupe selon la ligne 7-7 de la Fig. 6,
- la Fig. 8 est une vue partielle à plus grande échelle et en coupe axiale du support hydroélastique,
- la Fig. 9 est une vue de dessus du boîtier du support hydroélastique.

Le support hydroélastique représenté sur les figures et désigné dans son ensemble par la référence 1 est adapté pour être interposé entre deux ensembles à suspendre l'un par rapport à l'autre et plus particulièrement pour être interposé entre un groupe motopropulseur d'un véhicule automobile et la caisse de ce véhicule.

Le support hydroélastique 1 présente une forme générale externe cylindrique et comprend un corps 10 formé par une masse en matériau élastomère 11 reliant, d'une part, une armature supérieure 12 de préférence en acier et munie d'un organe de liaison 13 avec l'un des éléments à suspendre et notamment avec le groupe motopropulseur du véhicule et, d'autre part, une armature inférieure 14 de préférence en acier.

Dans l'exemple de réalisation représenté sur les figures, l'organe de liaison 13 est constitué par une vis et cet organe de liaison peut être constitué par tout autre système approprié.

Le corps 10 est réalisé par surmoulage et adhérisation de l'élastomère sur les armatures 12 et 14 et la masse 11 comporte un évidemment central 15 à la partie supérieure duquel est ménagée, dans la masse, une butée d'attaque 16 dont le rôle sera précisé ultérieurement.

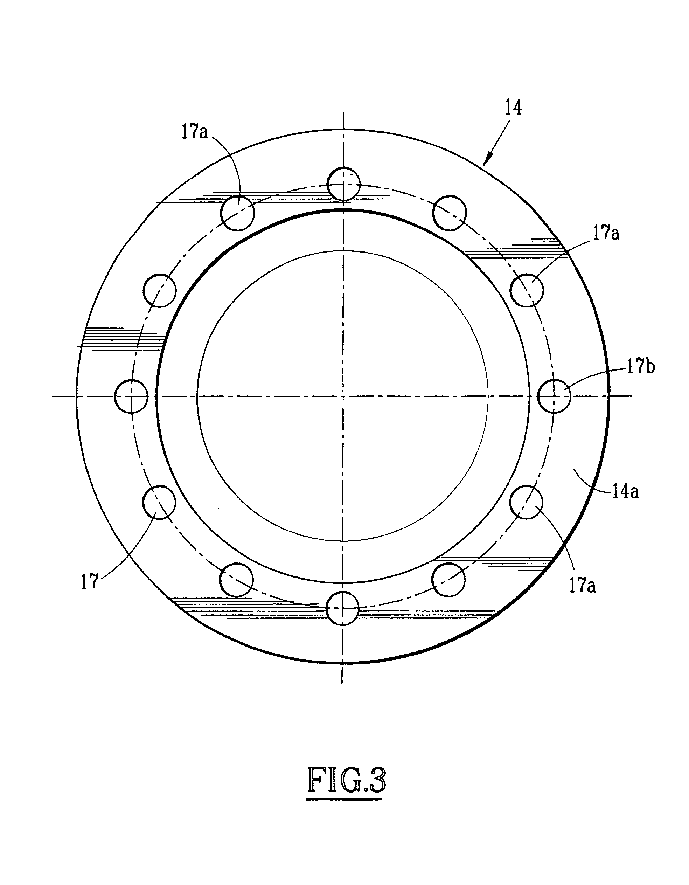

L'armature inférieure 14 comporte une portion horizontale 14a munie d'orifices 17 régulièrement répartis, comme représenté à la Fig. 3, et une portion cylindrique verticale 14b prolongeant vers le haut la portion horizontale 14a et noyée dans la masse 11 en matériau élastomère.

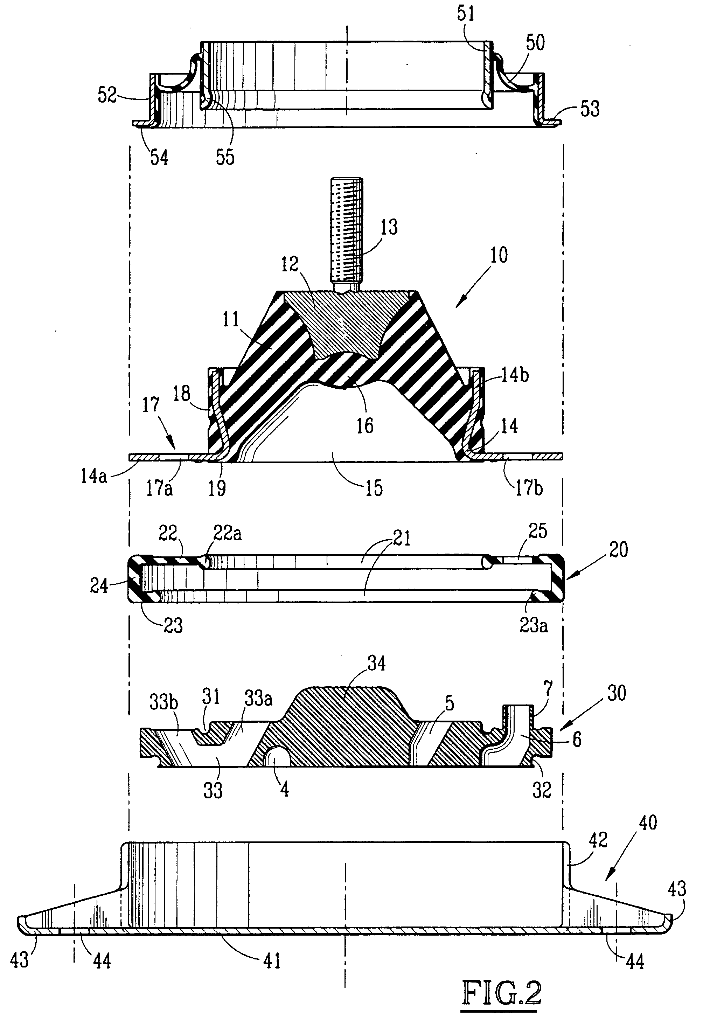

Ainsi, la face externe de la portion cylindrique 14b de l'armature inférieure 14 est recouverte d'élastomère 18 et la face inférieure de la portion horizontale 14a de l'armature inférieure 14 est munie, sur une partie de sa surface, d'une pellicule 19 en matériau élastomère, comme représenté à la Fig. 2.

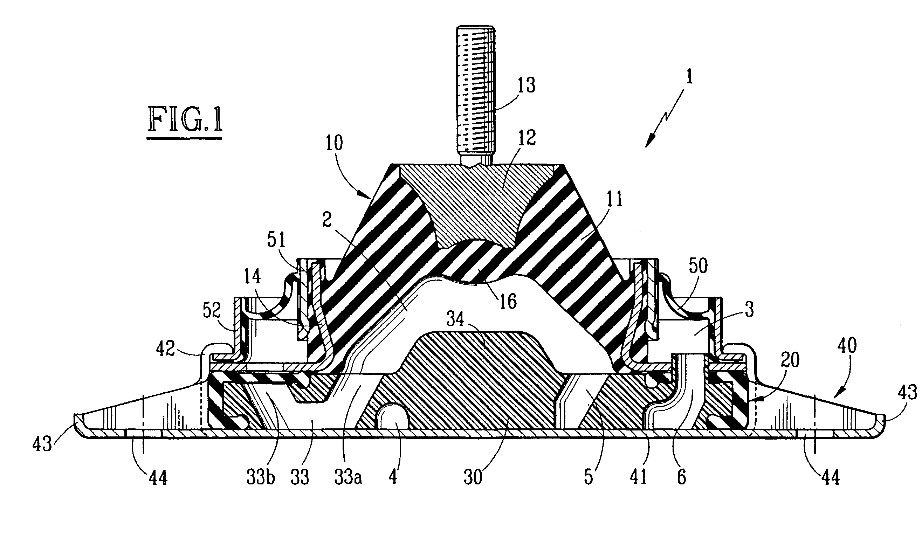

D'une manière générale et ainsi que représenté sur les Figs. 1 et 2, le support hydroélastique 1 comporte, en plus, du corps 10 :
- une chambre de travail 2 et une chambre d'expansion 3 remplies d'un liquide, comme par exemple de l'antigel, et communiquant entre elles par un conduit de liaison 4,
- un clapet de découplage hydraulique 20 entre la chambre de travail 2 et la chambre d'expansion 3,
- et un boîtier 40 reliant l'armature inférieure 14 du corps 10 à l'autre des éléments à suspendre du véhicule automobile et notamment à la caisse de ce véhicule automobile.

La chambre de travail 2 est délimitée, en partie haute, par la masse 11 en matériau élastomère du corps 10 et en partie basse par une pièce d'obturation 30 disposée dans le boîtier 40 et comportant le conduit de liaison 4 et le clapet de découplage hydraulique 20.

La chambre d'expansion 3 présente une forme annulaire autour de la chambre de travail 2, comme représentée à la Fig. 1, et est délimitée, en partie haute, par une membrane 50 montée sur la périphérie du corps 10 et, en partie basse, par le clapet de découplage hydraulique 20.

La membrane 50 d'obturation de la chambre d'expansion 3 est disposée entre une armature intérieure verticale 51 et une armature extérieure verticale 52.

De l'élastomère est adhérisé entre ces deux armatures 51 et 52 pour former la membrane 50 et contenir le fluide de la chambre d'expansion 3. Cette membrane 50 a la forme d'une onde de façon à avoir une raideur de tenue à la pression très faible.

L'armature externe 52 est munie, à sa partie inférieure, d'une embase 53 d'appui sur la portion horizontale 14a de l'armature inférieure 14 du corps 10 et dont la face inférieure est recouverte d'une pellicule 54 en matériau élastomère formant un joint d'étanchéité statique avec ladite portion horizontale 14a de l'armature inférieure 14.

L'armature interne 51 est destinée à être emmanchée sur la face externe 18 de la masse en matériau élastomère 11 du corps 10 et l'étanchéité par rapport à ce corps 10 est assurée par un bourrelet 55 ou des déformées locales non continues venant s'incruster dans l'élastomère 11 du corps 10 lors de l'emmanchement de ladite armature interne 51 sur ce corps 10.

Le clapet de découplage hydraulique 20 est de préférence réalisé en matériau élastomère et a pour but de diminuer la raideur dans la zone de bourdonnement ainsi que dans celle des bruits médiums.

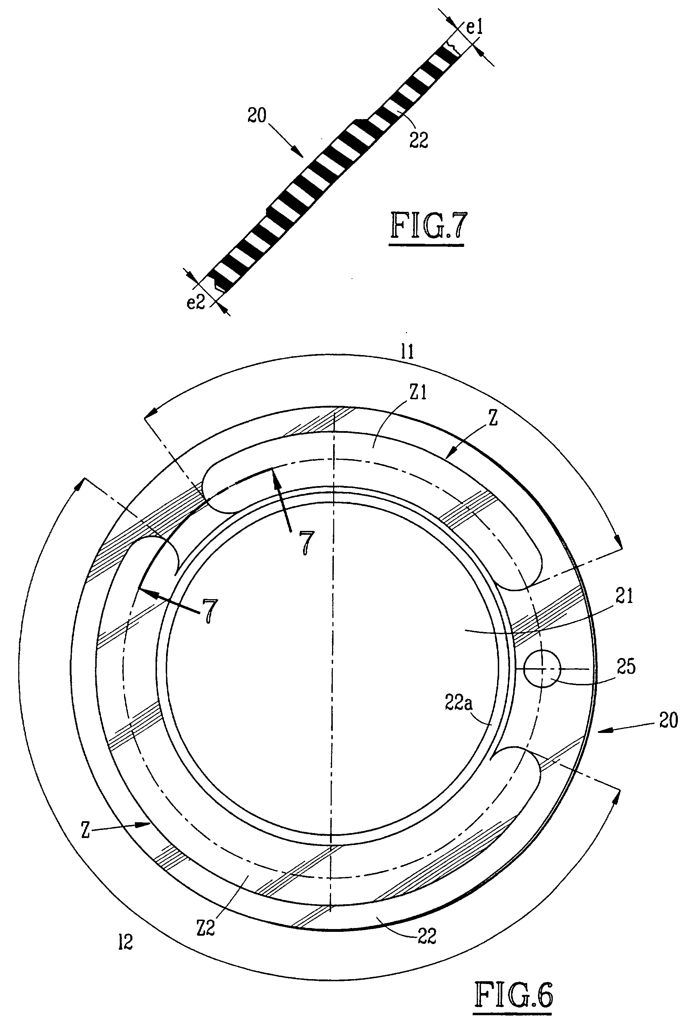

Ainsi que représenté sur les Figs. 2 et 6, le clapet de découplage hydraulique 20 est formé par une membrane circulaire munie d'un passage axial 21 et présente une section transversale en forme de U comprenant une paroi supérieure 22 et une paroi inférieure 23 parallèles et reliées entre elles par une paroi intermédiaire 24.

La membrane circulaire formant le clapet 20 est montée sur le bord périphérique de la pièce d'obturation 30 et le bord libre de la paroi supérieure 22 de cette membrane est muni d'un bourrelet 22a coopérant avec une gorge circulaire 31 ménagée sur la face supérieure de la pièce d'obturation 30 pour assurer l'étanchéité entre la chambre de travail 2 et la chambre d'expansion 3.

De même, le bord libre de la paroi inférieure 23 est muni d'un bourrelet 23a coopérant avec une gorge circulaire 32 ménagée sur la face inférieure de la pièce d'obturation 30 pour assurer l'étanchéité entre cette pièce 30 et le fond du boîtier 40.

Selon les fréquences à amortir lors de la sollicitation de la membrane circulaire formant le clapet de découplage hydraulique 20, la paroi supérieure 22 de cette membrane comporte au moins une zone d'amincissement Z dans laquelle l'épaisseur de ladite paroi supérieure 22 est inférieure à l'épaisseur du reste de cette paroi 22.

Ladite zone d'amincissement Z délimite une section de clapet coopérant d'un côté avec les orifices 17a ménagés dans la portion horizontale 14a de l'armature inférieure 14 et située en regard de ladite zone d'amincissement et de l'autre côté avec des canaux radiaux 33 ménagés dans la pièce d'obturation 30.

Les orifices 17a disposés en regard de la zone d'amincissement Z délimitant une section de clapet forment des passages de fluide depuis la chambre d'expansion 3 et ladite section de clapet et les canaux radiaux 33 forment des passages de fluide depuis la chambre de travail 2 vers ladite section de clapet.

A cet effet et comme représenté sur les Figs. 2, 5 et 8, chaque canal radial 33 comporte une première extrémité 33a qui débouche dans la chambre de travail 2 et une seconde extrémité 33b qui débouche au-dessous de la zone d'amincissement Z ménagée sur la paroi supérieure 22 de la membrane du clapet de découplage hydraulique 20.

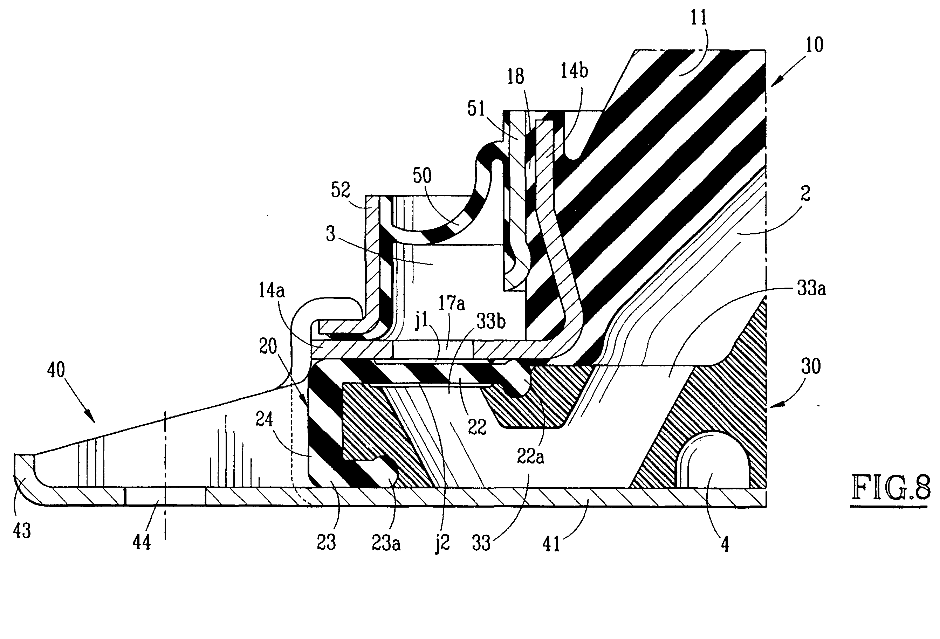

Compte tenu de la faible épaisseur de la pièce d'obturation 30, les canaux radiaux 33 débouchent sur la face inférieure de cette pièce d'obturation 30 et ils sont obturés par le fond 41 du boîtier 40 lorsque cette pièce d'obturation 30 est disposée dans ledit boîtier 40, ainsi que représenté à la Fig. 8.

Les extrémités 33a des canaux radiaux 33 débouchent sur la face supérieure de la pièce d'obturation 30 à l'intérieur d'une zone centrale délimitée par la gorge 31a et les extrémités 33b débouchent également sur la face supérieure de la pièce d'obturation 30 dans une zone périphérique à l'extérieur de ladite gorge 31.

L'étanchéité entre la zone centrale et la zone périphérique, de part et d'autre de la gorge 31, est assurée par le bourrelet 22a de la paroi supérieure 22 coopérant avec cette gorge 31.

Les orifices 17a ménagés dans la portion horizontale 14a de l'armature inférieure 14 du corps 10 sont disposés chacun en regard d'un canal radial 33 et le nombre et la section de ces canaux radiaux 33 sont déterminés en fonction de la fréquence à amortir.

En se reportant maintenant aux Figs. 6 à 8, on va décrire un mode préférentiel de réalisation dans lequel la paroi supérieure 22 de la membrane circulaire formant le clapet de découplage hydraulique 20 comporte deux zones d'amincissement, respectivement une première zone Z1 d'amortissement du bourdonnement et une seconde zone Z2 de filtrage et des bruits médiums.

La première zone Z1 présente une longueur 11 et une épaisseur e1 et la seconde zone Z2 présente une longueur 12 supérieure à la longueur 11 de la zone Z1 et une épaisseur e2 supérieure à l'épaisseur e1 de la zone Z1.

Ces zones Z1 et Z2 délimitent deux sections de clapet adaptées chacune à l'amortissement d'une plage de fréquences déterminées.

Comme représenté à la Fig. 8, les jeux j1 et j2, respectivement entre la face supérieure de la paroi supérieure 22 de la membrane circulaire du clapet de découplage hydraulique 20 et la face inférieure de la portion horizontale 14a de l'armature 14 et la face inférieure de ladite paroi supérieure 22 et la face supérieure de la pièce d'obturation 30 sont égaux et ces jeux 1 et j2 sont différents entre les zones Z1 et Z2, la zone Z1 ayant un jeu supérieur à la zone Z2 compte tenu de la différence d'épaisseur de la paroi supérieure 22 dans ces deux zones Z1 et Z2.

Dans l'exemple de réalisation représenté sur les figures, quatre orifices 17a et quatre canaux radiaux 33 sont disposés en regard de la zone Z1 de façon à amortir le bourdonnement, c'est à dire les fréquences comprises entre 150 et 200 hertz et sept orifices 17a et sept canaux radiaux 33 débouchent en regard de la zone Z2 pour assurer le filtrage des médiums, c'est à dire des fréquences au-delà de 400 hertz.

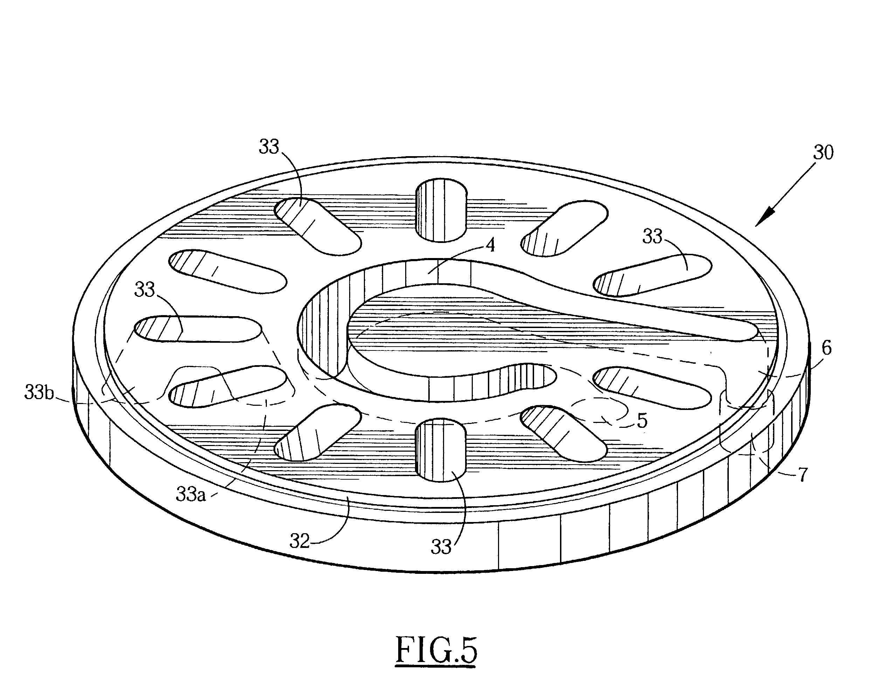

Ainsi que représenté sur les Figs. 2 et 5, le conduit de liaison 4 est constitué par une rainure ménagée sur la face inférieure de la pièce d'obturation 30 de façon à former avec le fond 41 du boîtier 40 ce conduit 4 lorsque ladite pièce d'obturation 30 est positionnée dans ce boîtier 40, comme représenté à la Fig. 1.

Le conduit de liaison 4 présente une forme semi-torique comportant une première extrémité 5 débouchant dans la chambre de travail 2 et une seconde extrémité 6 débouchant dans la chambre d'expansion 3 au moyen d'un embout vertical 7 en saillie par rapport à la surface supérieure de la pièce d'obturation 30.

Ainsi, lors du montage du clapet de découplage hydraulique 20 et du corps 10, l'embout 7 traverse la paroi supérieure 22 de ce clapet 20 par un orifice 25 ménagé dans cette paroi 22 en dehors de la ou des zones d'amincissement Z ainsi que la portion horizontale 14a de l'armature inférieure 14 par un orifice 17b.

La pièce d'obturation 30 est formée par une pièce monolithique par exemple en matière thermoplastique ou en aluminium ou en tout autre matériau approprié.

Cette pièce 30 comporte sur sa face supérieure un appui 34 en saillie et dans l'axe de ladite pièce 30 et cet appui 34 est destiné à coopérer avec la butée d'attaque 16 de la masse en matériau élastomère 11 lors des sollicitations du corps 10.

Le boîtier 40 comporte un rebord vertical 42 de positionnement et de sertissage de différents éléments composant le support hydroélastique 20, comme on le verra ultérieurement.

Le boîtier 40 est réalisé par exemple en acier ou en aluminium et assure la solidité de l'ensemble.

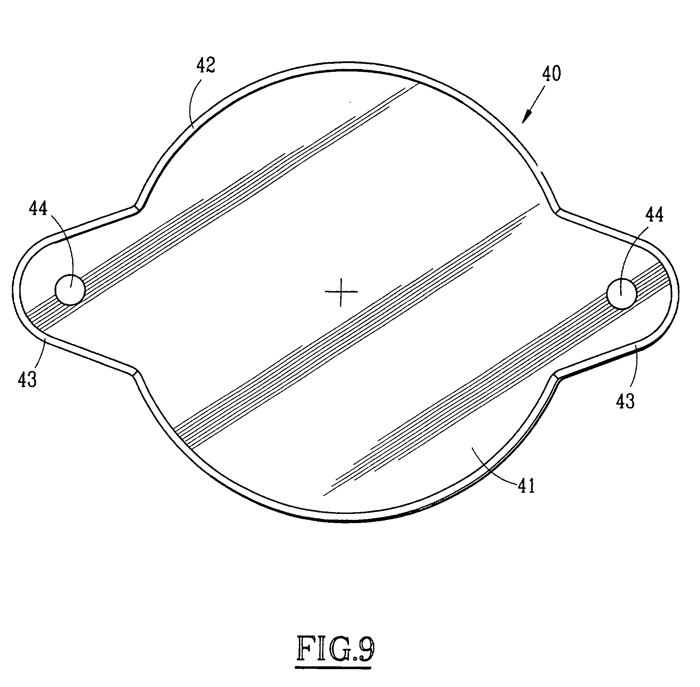

Le fond 41 de ce boîtier 40 est muni de deux oreilles 43 (Fig. 9) comportant chacune un orifice 44 pour le passage d'un organe de liaison, non représenté, avec la caisse du véhicule automobile.

Le montage des différents éléments composant le support hydroélastique 1 est réalisé automatiquement ou semi-automatiquement ou manuellement et de la façon suivante.

Tout d'abord, le boîtier 40 est mis en place dans un outil de montage et la membrane du clapet de découplage hydraulique 20 est montée sur la pièce d'obturation 30 en engageant l'embout 7 dans l'orifice 25 et en plaçant les bourrelets d'étanchéité 22a et 23a dans les gorges correspondantes 31 et 32.

Les zones d'amincissement Z constituant les sections de clapet anti-bourdonnement et anti-bruit médium se mettent en place automatiquement du fait que ces zones sont intégrées lors du moulage du clapet 20.

Ensuite, ce sous ensemble ainsi formé est posé à l'intérieur du boîtier 40 et centré par le rebord vertical 42.

La membrane 50 est mise en place sur le corps 10, sans orientation précise en emmanchant l'armature interne 51 sur la face externe en élastomère 18 du corps 10, le bourrelet 55 ou les déformés locales non continues s'incrustant dans cet élastomère pour maintenir en position la membrane 50 sur le corps 10.

Le corps 10 muni de la membrane 50 est posé sur la pièce d'obturation 30 à l'intérieur du boîtier 40 de telle sorte que l'extrémité de l'embout 7 pénètre dans l'orifice 17b.

L'extrémité libre du rebord vertical 42 est rabattue sur le bord 53 de l'armature externe 52 de la membrane 50 de façon à maintenir les différents éléments sur le boîtier 40.

L'étanchéité du support hydroélastique est réalisée grâce à la présence de l'élastomère 54 au-dessous de l'armature externe 53, des bourrelets d'étanchéité 22a et 23a du clapet de découplage hydraulique 20 ainsi que de l'élastomère 19 au-dessous de l'armature inférieure 14 du corps 10.

Comme représenté à la Fig. 8, seule la partie supérieure de la paroi 22 du clapet 20 possède des amincissements des zones Z1 et Z2 et concrétisant la différence de jeux. En effet, la face supérieure de la paroi 22 vient en appui sur la face inférieure de la portion horizontale 14a de l'armature inférieure 14 du corps 10.

Par contre, la face supérieure de la pièce d'obturation 30 porte des empreintes de forme correspondant aux zones Z1 et Z2 de façon à obtenir un jeu symétrique dans chacune des zones Z1 et Z2.

Lors du fonctionnement du support hydroélastique 1, le fluide passe alternativement de la chambre de travail 2 vers la chambre d'expansion 3 en fonction de l'excitation du moteur, voir de la route dans le cas au mode de hachis.

Dans le cas du mode de hachis, l'amplitude d'excitation est de l'ordre du millimètre. Le piston issu du corps 10. et formé par la masse de l'élastomère 11 comprise entre l'armature supérieure 12 et l'armature inférieure 14, transfère le fluide depuis la chambre de travail 2 vers la chambre d'expansion 3 et inversement.

Ce volume est égal au produit de la section équivalente au piston formé par le corps 10 par l'amplitude d'excitation et ce volume transféré est bien supérieur à celui accepté par la section de clapet Z1 et à celui accepté par la section de clapet Z2.

Ces clapets Z1 et Z2 viennent donc en appui sur leur support respectif et de ce fait le conduit de liaison 4 de grande longueur et de section importantes remplit sa fonction pour amortir le mode de hachis.

Dans le cas de l'amortissement du bourdonnement, l'amplitude excitatrice est plus faible et est telle que le déplacement est, à titre d'exemple, de l'ordre de plus ou moins 0,lmm pour une fréquence de 80 à 200 Hz.

Le piston formé par la masse d'élastomère 11 comprise entre l'armature supérieure 12 et l'armature inférieure 14 transfère du fluide depuis la chambre de travail 2 vers la chambre d'expansion 3 et inversement et ce volume de liquide transféré est égal au produit de la section équivalente au piston par l'amplitude d'excitation.

Dans ce cas, le volume transféré est inférieur à celui accepté par la zone de clapet Z1 et supérieur à celui accepté par la zone de clapet Z2 ce qui fait que ladite zone Z1 est toujours libre et que ladite zone Z2 est en contact sur son appui.

Ainsi, dans la zone de bourdonnement, il se produit un découplage hydraulique, c'est à dire une diminution de la raideur injectée dans la caisse du véhicule automobile.

Dans la zone des bruits médiums, les fréquences sont supérieures à 300 et 400 Hz si bien que la zone de hachis et celle de bourdonnement sont dépassées et la zone de clapet Z1 est bloquée.

Le fluide est toujours transféré par le piston formé par la masse de matériau élastomère 11 comprise entre l'armature supérieure 12 et l'armature inférieure 14 et dans ce cas, le volume de fluide transféré est inférieur à celui accepté par la zone de clapet Z2 ce qui fait que cette zone de clapet Z2 est toujours libre.

Il se produit donc bien un découplage hydraulique dans la zone des bruits médiums, c'est à dire une diminution de la raideur injectée dans la caisse du véhicule automobile pour ces fréquences.

Le support hydroélastique selon l'invention présente l'avantage d'être d'un encombrement réduit en hauteur grâce à sa chambre d'expansion périphérique.

Le positionnement périphérique de la chambre d'expansion permet d'avoir une très grande section du conduit de liaison et d'augmenter la surface du clapet de découplage hydraulique en intégrant au moins une zone de clapet et de préférence plusieurs zones de clapets ce qui permet au support hydroélastique selon l'invention de fonctionner dans des secteurs fréquentiels différents.

De plus, le support hydroélastique selon l'invention présente l'avantage d'être d'un coût peu élevé, tout en remplissant une fonction supplémentaire par rapport au support hydroélastique réalisé jusqu'à présent et d'être d'un montage simplifié.

## Revendications

1. Support hydroélastique destiné à être interposé entre deux éléments à suspendre l'un par rapport à l'autre, notamment pour la suspension d'un groupe motopropulseur dans une caisse d'un véhicule automobile, du type comprenant :
- un corps (10) formé par une masse (11) en matériau élastomère reliant, d'une part, une armature supérieure (12) munie d'un organe de liaison (13) avec l'un des éléments à suspendre et, d'autre part, une armature inférieure (14),
- un boîtier (40) reliant l'armature inférieure (14) du corps (10) à l'autre desdits éléments à suspendre,
- une chambre de travail (2) et une chambre d'expansion (3) remplies de liquide et communiquant entre elles par un conduit de liaison (4), ladite chambre d'expansion (3) présentant une forme annulaire autour de la chambre de travail (2) et étant délimitée en partie haute par une membrane (50) montée sur la périphérie du corps (10) et en partie basse par un clapet de découplage hydraulique (20) disposé entre la chambre de travail (2) et la chambre d'expansion (23),
**caractérisé en ce que** la chambre de travail (2) est délimitée en partie haute par la masse (11) en matériau élastomère du corps (10) et en partie basse par une pièce d'obturation (30) disposée dans le boîtier (40) et dans laquelle sont ménagés ledit conduit de liaison (4) et ledit clapet de découplage hydraulique (20), ladite masse (11) en matériau élastomère et ladite pièce d'obturation (30) étant placées en vis à vis.

2. Support hydroélastique selon la revendication 1, **caractérisé en ce que** le clapet de découplage hydraulique (20) est formé par une membrane circulaire munie d'un passage axial (21) et comprenant une paroi supérieure (22) et une paroi inférieure (23) parallèles et reliées entre elles par une paroi intermédiaire (24), ladite paroi supérieure (22) comportant au moins une zone d'amincissement Z délimitant une section de clapet coopérant d'un côté avec des orifices (17a) ménagés dans une portion horizontale (14a) de l'armature inférieure (14) du corps (10) et formant des passages du fluide depuis la chambre d'expansion (3) et la section de clapet et de l'autre côté avec des canaux radiaux (33) ménagés dans la pièce d'obturation (20) et formant des passages de fluide depuis la chambre de travail (2) vers ladite section de clapet.

3. Support hydroélastique selon la revendication 2, **caractérisé en ce que** les orifices (17a) sont disposés chacun en regard d'un canal radial (33) et le nombre et la section desdits canaux radiaux (33) sont déterminés en fonction de la fréquence à amortir.

4. Support hydroélastique selon les revendications 2 et 3, **caractérisé en ce que** la paroi supérieure (22) comporte deux zones d'amincissement, une première zone Z1 d'amortissement du bourdonnement et une seconde zone Z2 de filtrage des bruits médiums de longueur et d'épaisseur supérieures à la longueur et à l'épaisseur de la première zone Z1.

5. Support hydroélastique selon la revendication 2, **caractérisé en ce que** la membrane circulaire est montée sur le bord périphérique de la pièce d'obturation (30).

6. Support hydroélastique selon la revendication 2, **caractérisé en ce que** le bord libre de la paroi supérieure (22) de la membrane circulaire est muni d'un bourrelet (22a) coopérant avec une gorge circulaire (31) ménagée sur la face supérieure de la pièce d'obturation (30) pour assurer l'étanchéité entre la chambre de travail (2) et la chambre d'expansion (3).

7. Support hydroélastique selon la revendication 2, **caractérisé en ce que** le bord libre de la paroi inférieure (23) de la membrane circulaire est muni d'un bourrelet (23a) coopérant avec une gorge circulaire (32) ménagée sur la face inférieure de la pièce d'obturation (30) pour assurer l'étanchéité entre ladite pièce (30) et le fond (41) du boîtier (40).

8. Support hydroélastique selon la revendication 1, **caractérisé en ce que** le conduit de liaison (4) présente une forme semi-torique comportant une première extrémité (5) débouchant dans la chambre de travail (2) et une seconde extrémité (6) débouchant dans la chambre d'expansion (3) au moyen d'un embout vertical (7) traversant la paroi supérieure (22) de la membrane circulaire et la portion horizontale (14a) de l'armature inférieure (14) du corps (10).

9. Support hydroélastique selon la revendication 1 et 2, **caractérisé en ce que** l'armature inférieure (14) du corps (10) comporte une portion cylindrique verticale (14b) prolongeant vers le haut la portion horizontale (14a) et noyée dans la masse en matériau élastomère (11).

10. Support hydroélastique selon l'une quelconque des revendications précédentes, **caractérisé en ce que** la membrane d'obturation (50) de la chambre d'expansion (3) a la forme d'une onde et est disposée entre une armature interne (51) verticale destinée à être emmanchée sur la face externe de la masse (11) en matériau élastomère et une armature externe (52) verticale munie à sa partie inférieure d'une embase (53) d'appui sur la portion horizontale (14a) de l'armature inférieure (14) du corps (10) et dont la face inférieure est recouverte d'une pellicule (34) en matériau élastomère.

11. Support hydroélastique selon l'une quelconque des revendications précédentes, **caractérisé en ce que** le boîtier (40) comporte un rebord vertical (42) de positionnement et de sertissage de la pièce d'obturation (30) munie du clapet de découplage hydraulique (20), de l'armature inférieure (14) du corps (10) et de l'armature externe (52) de la membrane (50) d'obturation de la chambre d'expansion (3).

## Patentansprüche

1. Hydroelastischer Träger, der dazu bestimmt ist, zwischen zwei aneinander aufzuhängenden Elementen eingefügt zu werden, insbesondere für die Aufhängung einer Triebwerksbaugruppe in einem Rahmen eines Kraftfahrzeugs, des Typs, der umfaßt:
- einen Körper (10), der aus einer Masse (11) aus elastomerem Material gebildet ist und einerseits einen oberen Beschlag (12), der mit einem Organ (13) für die Verbindung mit einem der aufzuhängenden Elemente versehen ist, und andererseits einen unteren Beschlag (14) miteinander verbindet,
- ein Gehäuse (40), das den unteren Beschlag (14) des Körpers (10) mit dem anderen der aufzuhängenden Elemente verbindet,
- eine Arbeitskammer (2) und eine Ausdehnungskammer (3), die mit Flüssigkeit gefüllt sind und über eine Verbindungsleitung (4) miteinander kommunizieren, wobei die Ausdehnungskammer (3) eine ringförmige Gestalt um die Arbeitskammer (2) besitzt und im oberen Teil durch eine am Umfang des Körpers (10) angebrachte Membran (50) und im unteren Teil durch eine Hydraulikentkopplungsklappe (20), die zwischen der Arbeitskammer (2) und der Ausdehnungskammer (23) angeordnet ist, begrenzt ist,
**dadurch gekennzeichnet, daß** die Arbeitskammer (2) im oberen Teil durch die Masse (11) aus lastomerem Material des Körpers (10) und im unteren Teil durch ein im Gehäuse (40) angeordnetes Verschlußteil, in dem die Verbindungsleitung (4) und die Hydraulikentkopplungsklappe (20) ausgebildet sind, begrenzt ist, wobei die Masse (11) aus elastomerem Material und das Verschlußteil (30) einander gegenüber angeordnet sind.

2. Hydroelastischer Träger nach Anspruch 1, **dadurch gekennzeichnet, daß** die Hydraulikentkopplungsklappe (20) durch eine kreisförmige Membran gebildet ist, die mit einem axialen Durchgang (21) versehen ist und eine obere Wand (22) sowie eine untere Wand (23) umfaßt, die zueinander parallel sind und miteinander durch eine Zwischenwand (24) verbunden sind, wobei die obere Wand (22) wenigstens eine verjüngte Zone Z aufweist, die einen Abschnitt der Klappe begrenzt, die einerseits mit Öffnungen (17a), die in einem horizontalen Abschnitt (14a) des unteren Beschlags (14) des Körpers (10) ausgebildet sind und Fluiddurchlässe von der Ausdehnungskammer (3) und von dem Klappenabschnitt bilden, und andererseits mit radialen Kanälen (33) zusammenwirkt, die in dem Verschlußteil (20) ausgebildet sind und Fluiddurchlässe von der Arbeitskammer (2) zu dem Klappenabschnitt bilden.

3. Hydroelastischer Träger nach Anspruch 2, **dadurch gekennzeichnet, daß** die Öffnungen (17a) jeweils gegenüber einem radialen Kanal (33) angeordnet sind und daß die Anzahl und der Querschnitt der radialen Kanäle (33) in Abhängigkeit von der zu dämpfenden Frequenz festgelegt sind.

4. Hydroelastischer Träger nach den Ansprüchen 2 und 3, **dadurch gekennzeichnet, daß** die obere Wand (22) zwei verjüngte Zonen umfaßt, wovon eine erste Zone Z1 der Dämpfung von Summtönen dient und eine zweite Zone Z2 der Filterung mittleren Rauschens dient und eine Länge sowie eine Dicke besitzt, die größer als die Länge bzw. die Dicke der ersten Zone Z1 ist.

5. Hydroelastischer Träger nach Anspruch 2, **dadurch gekennzeichnet daß** die kreisförmige Membran an dem Umfangsrand des Verschlußteils (30) angebracht ist.

6. Hydroelastischer Träger nach Anspruch 2, **dadurch gekennzeichnet, daß** der freie Rand der oberen Wand (22) der kreisförmigen Membran mit einem Wulst (22a) versehen ist, der mit einer kreisförmigen Kehle (31) zusammenwirkt, die in der oberen Fläche des Verschlußteils (30) ausgebildet ist, um die Dichtheit zwischen der Arbeitskammer (2) und der Ausdehnungskammer (3) zu gewährleisten.

7. Hydroelastischer Träger nach Anspruch 2, **dadurch gekennzeichnet, daß** der freie Rand der unteren Wand (23) der kreisförmigen Membran mit einem Wulst (23a) versehen ist, der mit einer kreisförmigen Kehle (32) zusammenwirkt, die in der unteren Fläche des Verschlußteils (30) ausgebildet ist, um die Dichtheit zwischen dem Teil (30) und dem Boden (41) des Gehäuses (40) zu gewährleisten.

8. Hydroelastischer Träger nach Anspruch 1, **dadurch gekennzeichnet, daß** die Verbindungsleitung (4) die Form eines Halbtorus aufweist und ein erstes Ende (5), das in die Arbeitskammer (2) mündet, sowie ein zweites Ende (6), das mittels eines vertikalen Ansatzes (7), der die obere Wand (22) der kreisförmigen Membran und den horizontalen Abschnitt (14a) des unteren Beschlags (14) des Körpers (10) durchläuft, in die Ausdehnungskammer (3) mündet, aufweist.

9. Hydroelastischer Träger nach Anspruch 1 und 2, **dadurch gekennzeichnet, daß** der untere Beschlag (14) des Körpers (10) einen vertikalen zylindrischen Abschnitt (14b) umfaßt, der den horizontalen Abschnitt (14a) nach oben verlängert und in die Masse aus elastomeren Material (11) eingebettet ist.

10. Hydroelastischer Träger nach einem der vorhergehenden Ansprüche, **dadurch gekennzeichnet, daß** die Verschlußmembran (50) der Ausdehnungskammer (3) die Form einer Welle hat und zwischen einem vertikalen inneren Beschlag (51), der dazu bestimmt ist, auf die äußere Fläche der Masse (11) aus elastomerem Material aufgebracht zu werden, und einem vertikalen äußeren Beschlag (52), der in seinem unteren Teil mit einem Ansatz (53) für die Abstützung auf dem horizontalen Abschnitt (14a) des unteren Beschlags (14) versehen ist und dessen untere Fläche mit einem dünnen Überzug (34) aus elastomerem Material überzogen ist, angeordnet ist.

11. Hydroelastischer Träger nach einem der vorhergehenden Ansprüche, **dadurch gekennzeichnet, daß** das Gehäuse (40) eine vertikale Kante (52) für die Positionierung und Festklemmung des Verschlußteils (30), das mit der Hydraulikentkopplungsklappe (20), dem unteren Beschlag (14) des Körpers (10) und dem äußeren Beschlag (52) der Verschlußmembran (50) der Ausdehnungskammer (3) versehen ist, umfaßt.

## Claims

1. Hydroelastic support to be interposed between two elements to be suspended relative to one another, especially for the suspension of a motive power unit in a body of a motor vehicle, of the type comprising:
- a body (10) formed by a mass (11) of elastomeric material connecting, on the one hand, an upper brace (12) provided with a linking member (13) for linking to one of the elements to be suspended and, on the other hand, a lower brace (14),
- a casing (40) connecting the lower brace (14) of the body (10) to the other of the elements to be suspended,
- a working chamber (2) and an expansion chamber (3) which are filled with liquid and communicate with one another by way of a linking duct (4), the expansion chamber (3) having an annular shape around the working chamber (2) and being delimited at the upper portion by a membrane (50) mounted on the periphery of the body (10) and at the lower portion by a hydraulic decoupling valve (20) disposed between the working chamber (2) and the expansion chamber (3),
**characterised in that** the working chamber (2) is delimited at the upper portion by the mass (11) of elastomeric material of the body (10) and at the lower portion by a closing member (30) which is disposed in the casing (40) and in which the linking duct (4) and the hydraulic decoupling valve (20) are located, the mass (11) of elastomeric material and the closing member (30) being placed opposite each other.

2. Hydroelastic support according to claim 1,
**characterised in that** the hydraulic decoupling valve (20) is formed by a circular membrane provided with an axial passage (21) and comprising an upper wall (22) and a lower wall (23) which are parallel and connected to one another by an intermediate wall (24), the upper wall (22) comprising at least one tapering region Z delimiting a valve cross-section cooperating, on one side, with openings (17a) provided in a horizontal portion (14a) of the lower brace ((14) of the body (10) and forming fluid passages from the expansion chamber (3) and the valve cross-section and, on the other side, with radial channels (33) provided in the closing member (20) and forming fluid passages from the working chamber (2) to the valve cross-section.

3. Hydroelastic support according to claim 2,
**characterised in that** the openings (17a) are each disposed facing a radial channel (33) and the number and cross-section of the radial channels (33) are determined as a function of the frequency to be damped.

4. Hydroelastic support according to claims 2 and 3,
**characterised in that** the upper wall (22) comprises two tapering regions, a first region Z1 for damping the humming and a second region Z2 which filters middle-range noise and which is of a length and a thickness greater than the length and the thickness of the first region Z1.

5. Hydroelastic support according to claim 2,
**characterised in that** the circular membrane is mounted on the peripheral edge of the closing member (30).

6. Hydroelastic support according to claim 2,
**characterised in that** the free edge of the upper wall (22) of the circular membrane is provided with a bead (22a) cooperating with a circular groove (31) provided on the upper face of the closing member (30) in order to ensure sealing between the working chamber (2) and the expansion chamber (3).

7. Hydroelastic support according to claim 2,
**characterised in that** the free edge of the lower wall (23) of the circular membrane is provided with a bead (23a) cooperating with a circular groove (32) provided on the lower face of the closing member (30) in order to ensure sealing between the member (30) and the base (41) of the casing (40).

8. Hydroelastic support according to claim 1,
**characterised in that** the linking duct (4) has a semi-toric shape comprising a first end (5) leading into the working chamber (2) and a second end (6) leading into the expansion chamber (3) by way of an upright lengthening piece (7) extending through the upper wall (22) of the circular membrane and the horizontal portion (14a) of the lower brace (14) of the body (10).

9. Hydroelastic support according to claims 1 and 2,
**characterised in that** the lower brace (14) of the body (10) comprises an upright cylindrical portion (14b) upwardly extending the horizontal portion (14a) and embedded in the mass of elastomeric material (11).

10. Hydroelastic support according to any one of the preceding claims, **characterised in that** the closing membrane (50) of the expansion chamber (3) has the shape of a wave and is disposed between an upright inner brace (51) which is to be fitted onto the outer face of the mass (11) of elastomeric material and an upright outer brace (52) provided, at its lower portion, with a shoulder (53) which bears on the horizontal portion (14a) of the lower brace (14) of the body (10) and the lower face of which is covered with a film (54) of elastomeric material.

11. Hydroelastic support according to any one of the preceding claims, **characterised in that** the casing (40) comprises an upright flange (42) for positioning and crimping the closing member (30) provided with the hydraulic decoupling valve (20), the lower brace (14) of the body (10) and the outer brace (52) of the membrane (50) for closing the expansion chamber (3).
